# EUROPEAN PATENT SPECIFICATION

(11) **EP 2 009 036 B1**
(45) Date of publication and mention of the grant of the patent: **14.09.2011**
(21) Application number: 08010848.3
(22) Date of filing: 14.06.2008
(51) Int. Cl.: C08G 18/10, C08G 18/76, C09D 175/08, C08K 3/34

(54) **Ambient temperature curable surface finishing material for indoor and outdoor facilities**
Bei Raumtemperatur härtbares Oberflächenabschlussmaterial für Einrichtungen drinnen und draußen
Matériau de finition de surface durcissable à température ambiante pour installations internes et externes

(30) Priority: 28.06.2007 JP 2007170504
(43) Date of publication of application: 31.12.2008
(73) Proprietor: Bayer MaterialScience AG, 51368 Leverkusen (DE)
(72) Inventor: Mitsuaki, Ikebe, 565-0821 Suitashi Osaka (JP); Tadayoshi, Mikami, 657-0024 Kobe Hyogo (JP); Schmidt, Manfred, Dr., 41540 Dormagen (DE); Krause, Jens, Dr., 51063 Köln (DE)

(56) References cited:
- EP-A- 0 802 209
- US-A- 4 294 934

## Description

### TECHNICAL FIELD

The present invention relates to an ambient temperature curable surface finishing material for indoor and outdoor facilities which is useful as a surface finish for a pavement surface in indoor and outdoor facilities such as athletic fields, multipurpose play grounds, parks and walking trails and for floor surfaces, exterior surfaces and roof surfaces of buildings.

### BACKGROUND ART

Paving surfaces for indoor and outdoor facilities such as an athletic field, multipurpose play ground, park and walking trail and for floor surface, exterior surface and roof surface of building may be composed of any of a variety of surface finishing materials. Characteristics of desirable surface finishing materials include: (1) the ability to maintain a beautiful appearance for a long period of time, (2) providing a necessary functional feature or characteristic, and (3) ensuring safety of users.

One known surface finishing material is a two-component ambient temperature curable polyurethane composition composed of (1) a base compound (A agent) composed mainly of a urethane prepolymer that is the reaction product of toluene diisocyanate (hereinafter referred to as "TDI") or diphenylmethane diisocyanate (hereinafter referred to as "MDI") with a polyol, and (2) a hardener (B liquid) composed mainly of a mixture of an amine based crosslinker such as 3,3'-dichloro-4,4'-diaminophenylmethane (hereinafter referred to as "MOCA") and a polyol. (See, e.g., Japanese Examined Patent Publication No. Sho56-40205 (1981)).

However, MOCA, an amine based crosslinker may be carcinogenic to humans. To ensure safety of working environments and workers, it is necessary to work with the greatest care, raising a problem of imposing a substantial burden.

Japanese Unexamined Patent Publication No. Hei8-85717 (1996), discloses a urethane elastomer obtained by casting molding or spray forming using a prepolymer with a specific isocyanate terminal and dimethylthiotoluenediamine (hereinafter referred to as "DMTDA").

Japanese Unexamined Patent Publication No. 2001-172360 discloses a composition for an elastomer-forming spray composed of two components. Component (A) is a mixture of MDI isomers and carbodiimide-modified MDI and (B) component is mainly a polyol and a hardener.

Further, although the DMTDA described in Japanese Unexamined Patent Publication No. Hei8-85717 (1996) is relatively mild in reactivity compared to the composition described in Japanese Unexamined Patent Publication No. 2001-172360, it is not suitable for a hand-painting operation requiring a long coating time. When the reactivity is intentionally delayed, the fundamental reaction does not proceed and strength deteriorates. There is also a fear that the surface condition becomes bad due to trapping air bubbles and adhesion takes place causing the lowering of strength.

On the other hand, use of a hardener which is very fast in reactivity makes it necessary for the coating work to be done rapidly using a processing machine like a spray machine. Such highly reactive modifiers are not suitable for hand-painting operation.

Consequently, methods for delaying the reaction time after mixing 2 liquids and ensuring a certain usable time have been investigated. The type of prepolymer and polyol used, the kinds of crosslinkers, the ratio of NCO/OH and the like have been evaluated but no practical solution has yet been found.

### SUMMARY OF THE INVENTION

It is an object of the present invention to provide a good ambient temperature curable surface finishing material for indoor and outdoor facilities which has a sufficiently long reaction time that it can be properly applied and which produces a good finish after curing.

This and other objects which will be apparent to those skilled in the art are achieved with the polyurethane based composition of the present invention. This polyurethane-based composition is produced by combining an "A-side" composed mainly of a urethane prepolymer and a "B-side" composed of polyol, crosslinker and filler. The urethane prepolymer in the "B-side" has a terminal isocyanate group and is obtained by reaction of a polyisocyanate with a polyol (hereinafter referred to as "urethane prepolymer"). The polyisocyanate in the A-side contains 50% by weight or more of 2,4'-MDI. The filler in the B-side is acidic and has a pH of less than 7. The crosslinker in the B-side is preferably an aromatic amine based crosslinker.

### DETAILED DESCRIPTION OF THE INVENTION

The polyurethane based composition of the present invention is produced by combining an "A-side" composed mainly of a urethane prepolymer and a "B-side" composed of polyol, crosslinker and filler. The urethane prepolymer in the "B-side" has a terminal isocyanate group and is obtained by reaction of a polyisocyanate with a polyol (hereinafter referred to as "urethane prepolymer"). The polyisocyanate in the A-side contains 50% by weight or more of 2,4'-MDI. The filler in the B-side is acidic and has a pH of less than 7.

In another embodiment of the invention, the B-side is composed of a polyol, a filler and an aromatic amine based crosslinker.

In a particularly preferred embodiment of the present invention, the ambient temperature curable surface finishing material includes a polyurethane based composition which is the reaction product of an A-side which includes a prepolymer formed from an isocyanate composed of 50% by weight or more of 2,4'-MDI and a B-side which includes a polyol containing an aromatic amine based crosslinker.

The ambient temperature curable surface finishing material of the present invention does not increase in viscosity from 5000 to 50,000 mPa·s after mixing the A-side and the B-side for 20 minutes or more when viscosity is measured by a B-type viscometer (BH method) under conditions of No.7 rotor, 20 turns/min and 30°C.

The surface adhesion of the surface finishing material of the present invention after curing is suppressed. As used herein, "surface adhesion after curing is suppressed" means a condition that a surface adhesive force of the surface finishing material layer being measured by the following method becomes 2 N/cm² or less.

The method used for measuring surface adhesive force of the surface finishing material layer was as follows:
(1) The A-side and B-side are mixed under a clean atmosphere without dirt and powder dust, and a surface finishing material layer of 6 mm in thickness is formed by using the mixture;
(2) The surface finishing material layer from (1) is hardened through curing at 23°C for 7 days or at 23°C for 1 day and then at 50°C for 1 day;
(3) Then, on the surface of the surface finishing material layer thus cured, a stainless steel cylinder of 166.7 g in weight, 2.512 cm in diameter (area of base: 4.95 cm²) is quietly placed in a vertical position, left still for 10 seconds to be loaded naturally, then, the stainless steel cylinder is quietly lifted at a lifting speed of 28.5 mm ± 2.5 mm/min, the adhesive force at this time is measured; and
(4) Measurement as in (3) was repeated 5 times by changing a position of the stainless steel cylinder to be placed, and an average value of medium three measurements excluding the maximum and minimum values is defined as "a surface adhesive force of surface finishing material layer (unit: N/cm²)."

The ambient temperature curable surface finishing material for indoor and outdoor facilities of the present invention (hereinafter referred to as "surface finishing material") is, as described above, either (1) a combination of an A-side composed mainly of a special urethane prepolymer formed by a reaction of polyisocyanate containing 50% by weight or more of 2,4'-MDI with polyol, and a B-side composed mainly of polyol containing a crosslinker and a special filler containing an acid filler of less than pH 7 or (2) a combination of the same A-side as described above and a B-side composed mainly of polyol containing an aromatic amine based crosslinker and a filler.

In this surface finishing material, the curing reaction is delayed after mixing the A-side and B-side to ensure a relatively long usable time, thus, allowing the time to use in hand-painting operations in place of processing machines like a spray machine.

The surface finishing material of the present invention is also advantageous because the surface to which it is applied is not foamed and the surface condition is worsened by trapping air bubbles during its operation and the surface finish layer obtained would not be expected to have a lower strength. For example, one day after forming the surface finish layer, the surface finish layer is sufficiently strong that people can walk on it. Although there is a problem that a finishing material with a long usable time tends to leave adhesion on its surface after curing for a long period of time, when using the surface finishing material of the present invention, work operation becomes easy and a good finish is obtained because of suppression of adhesion on the surface, thereby resulting in a beautiful appearance.

As used herein, "usable time" means that subsequent to mixing of the A-side with the B-side, the viscosity increase is slow enough to allow uniform, smooth coating with the mixture. The slower the viscosity increase of a mixture, the longer is its usable time.

In a typical composition of the present invention (as shown in the Examples), the amount of time required for the viscosity of a mixture of A-side and B-side to increase up to a specific viscosity (viscosity is measured by a B-type viscometer (BH method) under conditions of No.7 rotor, 20 turns/min and 30°C), was measured at 25 minutes or more for viscosity increases from 5000 to 100000 mPa·s, 23 minutes or more for viscosity increases from 5000 to 80000 mPa·s, 20 minutes or more for viscosity increases from 5000 to 50000 mPa·s, and 15 minutes or more for viscosity increases from 5000 to 30000 mPa.s. These measurements clearly indicate that a sufficient usable time can be obtained with the surface finishing materials of the present invention.

In the present invention, in particular, in the case where a filler containing an acid filler is included in the B-side, and also where an aromatic amine based crosslinker (for example, isobutyl 4-chloro-3,5 diaminobenzoate (hereinafter referred to as "ICDAB") and DMTDA are used alone or in combination), it is possible to achieve the delay of usable time after mixing two liquids of A-side and B-side even when using an aromatic amine based crosslinker without using MOCA with its safety problems.

The present invention is particularly advantageous because the time for a viscosity increase after mixture of the A-side and B-side (measured by a B-type viscometer (BH method) under conditions of No.7 rotor, 20 turns/min and 30°C) to 50000 mPa.s from 5000 mPa.s is 20 minutes or more, and the surface adhesion of the surface finishing material after curing is suppressed.

The surface finishing material of the present invention is composed of a polyurethane composition produced by combining an A-side composed mainly of a urethane prepolymer having a terminal isocyanate group obtained by a reaction of polyisocyanate with polyol, and a B-side composed mainly of polyol containing a crosslinker and a filler.

The polyisocyanate used to produce the urethane prepolymer used as the major component of the A-side must contain 2,4'-MDI in an amount of 50% by weight or more (hereinafter abbreviated as "%"), preferably of from 70 to 98%. When the content of 2,4'-MDI is less than 50%, the reaction balance of 4.4'-MDI and 2,4'-MDI is bad, the surface to which the surface finishing material is applied is sticky after curing for a long time, adhesive force is left and workability is bad. Particularly advantageous usable times, strength and suppression of residual adhesive force, are achieved by using 2,4'-MDI in amounts of from 80 to 98%, most preferably, of from 95 to 98%.

MDI is industrially produced. MDI that is 50% or more 2,4'-MDI, with the remaining less than 50% being made up of 4,4'-MDI alone, or 4,4'-MDI and a very small amount of 2,2'-MDI as isomers of 2,4'-MDI is preferred. MDI that composed of 2,4'-MDI in an amount of from 70 to 98%, preferably from 80 to 98%, most preferably from 95 to 98% is most suitable for the prepolymers used to produce the surface finishing material of the present invention. The more 2,4'-MDI present, the better is the effect.

However, in some cases, an isocyanate other than the MDI type, for example, TDI and the like may be included. However, in such cases, it is preferable that such isocyanate be used in an amount such that it constitutes no more than 20% of the total amount of polyisocyanate.

Examples of polyisocyanates other than the above-described MDI type which may optionally be included are: aromatic isocyanates such as polymethylene polyphenylene polyisocyanate, 2,4-TDI, 2,6-TDI, a mixed polyisocyanate of 2,4-TDI and 2,6-TDI, and xylene diisocyanate; aliphatic diisocyanates such as tetramethylehe diisocyanate, hexamethylene diisocyanate, 3-methyl-1,5-pentane diisocyanate and lysine diisocyanate; and alicyclic diisocyanates such as isophorone diisocyanate, hydrogenated TDI, hydrogenated xylene diisocyanate, hydrogenated diphenylmethane diisocyanate and tetramethylxylene diisocyanate.

Polyols suitable for production of the urethane prepolymer used in the present invention include: polyether polyols, polyoxytetramethylene glycol, polycaprolactan polyol and polyester polyols. Among these, polyoxyalkylene polyols which are obtained by addition polymerization of a polyhydric alcohol such as ethylene glycol, propylene glycol, 1,4-butanediol, glycerin, trimethylol propane and pentaerythritol with propylene oxide, ethylene oxide or the like are preferred. Polyoxyalkylene polyols with a molecular weight of from 100 to 10000 and a functionality of from 2 to 3 are particularly preferred. Polyoxypropylene polyols with a molecular weight of 1000 to 8000 and a functionality of from 2 to 3 are most preferred.

The urethane prepolymer used in the present invention can be obtained from the above-described polyisocyanate and polyol as follows. A stoichiometric excess of the polyisocyanate is mixed with the polyol and then stirred at a predetermined temperature (for example, 50 to 120°C) to obtain the desired urethane prepolymer.

The isocyanate content of the above-described urethane prepolymer (hereinafter referred to as "%NCO" or "NCO content") is generally from 1.0 to 10.0%, preferably from 3.0 to 5.0%. When the NCO content is less than 3.0%, it is possible that adhesion will remain on the surface finish layer obtained. When the %NCO is increased to 3.0% or more, the reaction proceeds faster, and the time that adhesion remains on the surface can be shortened. When the NCO content exceeds 5.0%, the condition of surface finish layer becomes good but it is possible that the usable time may be shortened.

In addition to the urethane prepolymer, the A-side may also include one or more additives such as a plasticizer and/or a defoaming agent. Suitable plasticizers include: diisononyl phthalate (hereinafter referred to as "DINP), dioctyl phthalate, dioctyl adipate and the like. Suitable defoaming agents include: a dimethylsiloxane- based defoaming agent and a polyacrylate- based defoaming agent.

The polyol which is a major component of the B-side in the present invention may be any of the polyols described above as being useful for preparation of the urethane prepolymer. It is preferred that the polyol have a molecular weight of from 2000 to 10000 and a functionality of from 2 to 4. The polyol used in the B-side may be the same polyol as was used to produce the prepolymer or a different polyol.

The B-side includes a crosslinker as well as at least one polyol. Suitable crosslinkers include: ICDAB, DMTDA, 1,4 butanediol (hereinafter referred to as "1,4-BD"), 1,3-diphenylguanidine (hereinafter referred to as "DPG"), and diethyltoluenediamine (hereinafter referred to as "DETDA"). Particularly preferred are the aromatic amine based crosslinkers because these crosslinkers extend usable time while yielding performance keeping/improving effects on strength, elongation or the like. The preferred aromatic amine based crosslinkers include, ICDAB and DMTDA either alone or in combination. MOCA may be used as a crosslinker in an environment with sufficient consideration for safety.

The filler used in the B-side is preferably a filler containing an acid filler with a pH of less than 7. The acid filler content is generally 25% or more of the total weight of fillers, preferably 50% or more. It is of course possible that all of the filler(s) may be an acid filler. Because pH varies with the composition of filler components or the method used to treat the filler, the above-described "acid filler" cannot be identified necessarily by the name. For example, some clays such as kaolin (so-called "kaolin clay" is included), silica or the like whose pH is less than 7, particularly those with a pH of 5 or less, can provide a good delay effect of usable time and a suppression effect of residual surface adhesion. More specifically, it is preferred to use a commercially available Kaolin clay HA-A (manufactured by Sanyou Clay Ltd.; pH 4.5 to 5.5), or Guaranteed Clay W (manufactured by Takehara Kagaku Kogyo Co., Ltd.; pH 3.84). These acid fillers may be used alone or in combination of 2 or more types.

The pH of the above-described filler can be obtained by measurement in accordance with JIS K5101 (pH measurement, ordinary method). However, in the present invention, 90 g of ion-exchanged water is used for 10 g of a sample.

The acid filler used in the B-side may be used in combination with a nonacid filler. Even where an aromatic amine based crosslinker is used, the effect of the present invention can be obtained by using a nonacid filler alone without any acid filler. Suitable nonacid fillers include: calcium carbonate, barium sulfate, zeolite, talc, anhydrous gypsum (CaSO₄), mica and the like, alone or in combination.

The total amount of filler(s) is 90% or less of the total weight of B-side, preferably from 1 to 70%.

The B-side may also optionally include a catalyst, a coloring agent, a moisture absorbent, a defoaming agent, a plasticizer, a stabilizer, a leveling agent, a modifier or the like according to need in addition to these essential components.

Suitable catalysts include: lead octylate (OctPb), lead naphthenate, dibutyltin dilaurate and dimethyltin dilaurate. Suitable coloring agents include: iron oxide, titanium oxide, Bengal red, chromium oxide and carbon black. Suitable moisture absorbents include zeolite. Suitable defoaming agents include dimethylsiloxane based defoaming agents and polyacrylate based deforming agents. Suitable plasticizers include: DINP, dioctyl phthalate and dioctyl adipate. Suitable stabilizers include: hindered phenols, hindered amines and benzothiazole.

The B-side used in the present invention can be obtained by mixing a polyol, a crosslinker, a filler and optional components while stirring at a predetermined temperature (for example 50 to 150°C).

The surface finishing material of the present invention is a two-component ambient temperature curable polyurethane composition formed by combining the specific A-side described above and the specific B-side described above. Generally, the A-side and the B-side are stored in different containers. Then, right before the start of actual operation, the A-side and B-side are mixed, and the mixture is used by coating a target part within its usable time. Additionally, the NCO index of the A-side to the B-side is preferably from 100 to 150.

The curing reaction which results in the surface finishing material of the present invention proceeds slowly after mixing the two liquids (i.e., the A-side and the B-side), and thus it has a feature of long usable time (generally, 20 minutes or more, preferably 30 minutes or more), so that it is not to limited to a spraying operation carried out within a short time by a processing machine such as a spray machine of the type used for conventional urethane-based surface finishing materials. Manual application of the surface finishing material of the present invention is possible.

The surface finish layer obtained by using the surface finishing material of the present invention has a beautiful appearance because of its curing characteristics and suppressed surface adhesion. In addition, the surface finish layer maintains its strength to such an extent that one can walk on the surface 1 day after the formation of the surface finish layer.

Particularly suitable uses for the surface finishing material of the present invention are surfacing finishing materials for a variety of facilities, whether such surfaces are indoors or outdoors. Specific applications for these materials include: floor surfaces, roof surfaces, exterior surfaces, balcony surfaces, and bicycle/car parking surfaces of commercial facilities, public facilities private residences. Preferred uses for the surface finishing materials of the present invention are: a pavement finish; and as a waterproof finish on artificial surfaces provided in an athletic field, park, walking trail, jogging track, multipurpose play ground, tennis court and the like.

The surface finishing material of the present invention is generally applied at a thickness of from 1 to 100 mm, preferably, from to 1 to 50 mm.

In addition to using the surface finishing material of the present invention as the finish layer, it can also be used as a base for an elastic particle (e.g., polyurethane, EPDM, natural rubber, synthetic rubber or the like) or an inorganic particle (e.g., grain, ceramic particle and glass pulverized powder) dispersed/contained or spread therein. This mixed composition can be used in applications for surface finish.

### EXAMPLES

The following Examples of the present invention and Comparative Examples are given to illustrate the present invention and contrast the invention with the prior art. However, the present invention is not limited to these Examples. The component compositions given in these Examples are all based on weight.

### Preparation of A-side

Polyisocyanates, polyols, etc. described in the following Tables 1 to 4 were mixed under nitrogen atmosphere and reacted at 80°C for 20 hours, then cooled, to obtain the A-side (A-1 through A-15) composed mainly of a urethane prepolymer having a terminal isocyanate group.

**Table 1:**

| | | | A-1 | A-2 | A-3 | A-4 | A-5 |
|---|---|---|---|---|---|---|---|
| COMPOSITION OF A-SIDE (parts by weight) | | Polyisocyanate 1¹ | 17.9 | - | - | - | - |
| | | Polyisocyanate 2² | - | 17.9 | - | - | - |
| | | Polyisocyanate 3³ | - | - | 17.9 | - | - |
| | | Polyisocyanate 4⁴ | - | - | - | 17.9 | - |
| | | Polyisocyanate 5⁵ | - | - | - | - | 17.9 |
| | | Polyol 1⁶ | 72.1 | 72.1 | 72.1 | 72.1 | 72.1 |
| | | Plasticizer: DINP | 10 | 10 | 10 | 10 | 10 |
| FEATURES | 2,4'-MDI content of Polyisocyanate | | 97% of 2,4'-MDI | 95% of 2,4'-MDI | 80% of 2,4'-MDI | 70% of 2,4'-MDI | 60% of 2,4'-MDI |
| | NCO% | | 3.0 | 3.0 | 3.0 | 3.0 | 3.0 |

| | | | | | | | |
|---|---|---|---|---|---|---|---|
| ¹ 97% 2,4'-MDI and 3% 4,4'-MDI ² 95% 2,4'-MDI and 5% 4,4'-MDI ³ 80% 2,4'-MDI and 20% 4,4'-MDI ⁴ 70% 2,4'-MDI and 30% 4,4'-MDI ⁵ 60% 2,4'-MDI and 40% 4,4'-MDI ⁶ Polyol 1 = Polyoxypropylene polyol (functionality of 2, Molecular weight = 2000) | | | | | | | |

**Table 2:**

| | | | A-6 | A-7 | A-8 | A-9 |
|---|---|---|---|---|---|---|
| COMPOSITION OF A-SIDE (parts by weight) | Polyisocyanate 6⁷ | | 17.9 | - | - | - |
| | Polyisocyanate 7⁸ | | - | 17.9 | - | - |
| | Polyisocyanate 8⁹ | | - | - | 16.6 | - |
| | Polyisocyanate 9¹⁰ | | - | - | - | 17.9 |
| | Polyol 1⁶ | | 72.1 | 72.1 | 73.4 | 72.1 |
| | Plasticizer: DINP | | 10 | 10 | 10 | 10 |
| FEATURE OF A-SIDE | | 2,4'-MDI content of Polyisocyanate | 50% of 2,4'-MDI | 40% of 2,4'-MDI | 80%of 2,4'-MDI | 0% of 2,4'-MDI |
| | | NCO% | 3.0 | 3.0 | 3.0 | 3.0 |

| | | | | | | |
|---|---|---|---|---|---|---|
| ⁷ 50% 2,4'-MDI] and 50% 4,4'-MDI ⁸ 40% 2,4'-MDI and 60% 4,4'-MDI ⁹ 80% 2,4'-MDI and 20% 2.4'-TDI ¹⁰ 100%4,4'-MDI ⁶ Same as Table 1 | | | | | | |

**Table 3:**

| | | A-10 | A-11 | A-12 |
|---|---|---|---|---|
| COMPOSITION OF A-SIDE (parts by weight) | Polyisocyanate 1¹ | 19.0 | 21.7 | 24.3 |
| | Polyol 1⁶ | 81.0 | 78.3 | 75.7 |
| | Plasticizer: DINP | - | - | - |
| FEATURE OF A-SIDE | % 2,4'-MDI | 97% of 2,4'-MD1 | 97% of 2,4'-MD1 | 97% of 2,4'-MDI |
| | % NCO | 3.0 | 4.0 | 5.0 |

| | | | | |
|---|---|---|---|---|
| ¹ Same as Table 1 ⁶ Same as Table 1 | | | | |

**Table 4:**

| | | A-13 | A-14 | A-15 |
|---|---|---|---|---|
| COMPOSITION OF A-SIDE (parts by weight) | Polyisocyanate 1¹ | 18.5 | 21.1 | 23.8 |
| | Polyol 1⁶ | 76.5 | 73.9 | 71.2 |
| | Plasticizer: DINP | 5 | 5 | 5 |
| FEATURE OF A-SIDE | 2,4'-MDI Content | 97% of 2,4'-MDI | 97% of 2,4'-MDI | 97% of 2,4'-MDI |
| | NCO% | 3.0 | 4.0 | 5.0 |

| | | | | |
|---|---|---|---|---|
| ¹ Same as Table 1 ⁶ Same as Table 1 | | | | |

### Preparation of B-Side

Components B-1 through B-11, composed mainly of polyol were obtained by mixing polyol etc. described in the following Tables 5 to 7 using a high-speed rotating stirrer.

**Table 5:**

| | | | B-1 | B-2 | B-3 | B-4 |
|---|---|---|---|---|---|---|
| COMPOSITION OF B-SIDE (parts by weight) | Polyol 2¹¹ | | 31.79 | 31.79 | 31.79 | 38.14 |
| | Crosslinker 1¹² | | 2.11 | - | - | 2.53 |
| | Crosslinker 2¹³ | | - | 2.33 | - | - |
| | Crosslinker 3¹⁴ | | - | - | 1.87 | - |
| | Plasticizer: DINP | | 12.51 | 12.51 | 12.51 | 15.01 |
| | Catalyst:17%OctPb/DINP¹⁵ | | 2.24 | 2.24 | 2.24 | 2.69 |
| | Colorant: Ferric oxide¹⁶ | | 3.94 | 3.94 | 3.94 | 4.72 |
| | Moisture absorbent: Zeolite¹⁷ | | 0.20 | 0.20 | 0.20 | 0.24 |
| | Stabilizer¹⁸ | | 1.26 | 1.26 | 1.26 | 1.50 |
| | Modifier¹⁹ | | 4.97 | 4.97 | 4.97 | 5.96 |
| | Filler | Clay W²⁰ | 40.85 | 40.85 | 40.85 | 29.05 |
| | Leveling agent²¹ | | 0.13 | 0.13 | 0.13 | 0.15 |

| | | | | | | |
|---|---|---|---|---|---|---|
| ¹¹ Polyoxypropylenepolyol (functionality of 3, Molecular weight = 4000) ¹² ICDAB (manufactured by YSK Inc., sold as BAYTEC XL1604) ¹³ MOCA (manufactured by Shuang-Bang Industrial Corp., sold as ISOCROSS SM) ¹⁴ DMTDA (manufactured by Albemarle Japan Corporation, sold as ETHACURE 300) ¹⁵ Nikka Octix lead 17% DINP, manufactured by Nihon Kagaku Sangyo Co., Ltd. ¹⁶ Bengala (Red iron oxide) YO-400 manufactured by Mikuni Color Ltd. ¹⁷ UOP T Powder manufactured by Union-Showa K.K. ¹⁸ Hindered phenol type/Benzotriazole type stabilizers (mixture of 4 kinds, manufactured by API Corporation, Sumitomo Chemical Co., Ltd., Johoku Chemical Co., Ltd. and Ouchishinko Chemical Industrial Co., Ltd.) ¹⁹ Two kinds manufactured by Shiraishi Kogyo Kaisha, Ltd. (mixture of Hakuenka O and Hakuenka CC) ²⁰ Guaranteed Clay W (pH 3.84) manufactured by Takehara Kagaku Kogyo Co., Ltd. ²¹ Floren AC-1190 manufactured by Kyoeisha Chemical Co., Ltd. | | | | | | |

**Table 6:**

| | | | B-5 | B-6 | B-7 | B-8 |
|---|---|---|---|---|---|---|
| COMPOSITION OF B-SIDE (parts by weight) | Polyol 2¹¹ | | 31.79 | 31.79 | 31.79 | 31.79 |
| | Crosslinker 1¹² | | 2.11 | 2.11 | 2.11 | 2.11 |
| | Plasticizer: DINP | | 12.51 | 12.51 | 12.51 | 12.51 |
| | Catalyst: 17%OctPb/DINP¹⁵ | | 2.24 | 2.24 | 2.24 | 2.24 |
| | Colorant: Ferric oxide¹⁶ | | 3.94 | 3.94 | 3.94 | 3.94 |
| | Moisture absorbent: Zeolite¹⁷ | | 0.20 | 0.20 | 0.20 | 0.20 |
| | Stabilizer¹⁸ | | 1.26 | 1.26 | 1.26 | 1.26 |
| | Modifier¹⁹ | | 4.97 | 4.97 | 4.97 | 4.97 |
| | Filler | Clay W²⁰ | - | 30.63 | 20.43 | 10.22 |
| | | Calcium carbonate ²² | - | 10.22 | 20.43 | 30.63 |
| | | Kaolin clay²³ | 40.85 | - | - | - |
| | Leveling agent²¹ | | 0.13 | 0.13 | 0.13 | 0.13 |

| | | | | | | |
|---|---|---|---|---|---|---|
| ¹¹ Same as Table 5 ¹² Same as Table 5 ¹⁵ Same as Table 5 ¹⁶ Same as Table 5 ¹⁷ Same as Table 5 ¹⁸ Same as Table 5 ¹⁹ Same as Table 5 ²⁰ Same as Table 5 ²¹ Same as Table 5 ²² Super #1700 (pH 9.78) manufactured by Maruo Calcium Co., Ltd. ²³ HA-A (pH 4.5-5.5) manufactured by Sanyou Clay Ltd. | | | | | | |

**Table 7:**

| | | | B-9 | B-10 | B-11 |
|---|---|---|---|---|---|
| COMPOSITION OF B-SIDE (parts by weight) | Polyol 2¹¹ | | 31.79 | 31.79 | 31.79 |
| | Crosslinker 1¹² | | 2.11 | - | 2.11 |
| | Crosslinker 4²⁴ | | - | 0.78 | - |
| | Plasticizer: DINP | | 12.51 | 12.51 | 12.51 |
| | Catalyst: 17%OctPb/DINP¹⁵ | | 2.24 | 2.24 | 2.24 |
| | Colorant: Ferric oxide¹⁶ | | 3.94 | 3.94 | 3.94 |
| | Moisture absorbent: Zeolite¹⁷ | | 0.20 | 0.20 | 0.20 |
| | Stabilizer¹⁸ | | 1.26 | 1.26 | 1.26 |
| | Modifier¹⁹ | | 4.97 | 4.97 | 4.97 |
| | Filler | Clay W²⁰ | - | 40.85 | - |
| | | Calcium carbonate²² | 40.85 | - | - |
| | | Kaolin clay²³ | - | - | - |
| | Leveling agent²¹ | | 0.13 | 0.13 | 0.13 |

| | | | | | |
|---|---|---|---|---|---|
| ¹¹ Same as Table 5 ¹² Same as Table 5 ¹⁵ Same as Table 5 ¹⁶ Same as Table 5 ¹⁷ Same as Table 5 ¹⁸ Same as Table 5 ¹⁹ Same as Table 5 ²⁰ Same as Table 5 ²² Same as Table 5 ²³ Same as Table 6 ²⁴ 1,4-butanediol | | | | | |

### Examples 1 to 26, Comparative Examples 1 to 3

Surface finishing materials were produced in the following Examples and Comparative Examples by combining 15 different A-sides with 11 different B-sides as shown in the following Tables 8 to 13.

The A-side and B-side were mixed, coated to a predetermined thickness, and cured to form a surface finishing layer. The usable time after mixing 2 liquids (i.e., an A-side and a B-side) and surface condition of the surface finishing layer obtained were evaluated as follows, and the results are shown in the following Tables 8 to 13.

### Usable time

A-side and B-side were stirred and mixed for about one and half minutes using an air mixer of 100-600 turns/min and a paint knife, then, a suitable amount of the mixture was transferred to a screw bottle of about 110 ml. The time (minute) it took for the mixture to reach a viscosity of 50000 mPa·s was measured using a B-type viscometer (BH method) under conditions of No. 7 rotor, 20 turns/min and 30°C. The measured time was defined as usable time.

### Surface condition 1 and presence of foaming

After mixing of the liquid A-side with the liquid B-side, the mixture was poured into an aluminum mold (no mold release agent used, at ordinary temperature) of 75 mm long, 75 mm wide and 6 mm deep coated with Teflon (trademark) polytetrafluoroethylene on the mold inner surface, and molded, followed by curing at 23°C for 24 hours. Thereafter, five expert monitors touched the surface with fingers to evaluate surface adhesion. The evaluations were done by criteria in 5 levels. The evaluation adopted was that agreed upon by 3 or more persons. The ratings given were as follows:
□: no adhesion and cured surface is very good
○: no adhesion and cured surface is good
Δ: some adhesion but no problem
×: problematic adhesion
××: strong adhesion or not cured, no practical use.
The presence of foaming on the cured surface was observed by eye.

### Surface condition 2

After mixing of the liquid A-side with the liquid B-side, the mixture was poured into the same aluminum mold as described above and molded, curing was conducted at 23°C for 7 days (or 23°C for 1 day plus 50°C for 1 day), surface adhesion after curing was evaluated in the same manner as for Surface condition 1.

### Surface condition 3

Curing was conducted in the same manner as was done to evaluate Surface condition 2 and the surface adhesive force of the surface finishing material after curing was measured according to the foregoing method. From the measurements obtained, the adhesion was evaluated by the following evaluation criteria.
○: 2N/cm² or less
×: more than 2N/cm²

### Hardness 1

Curing was conducted in the same manner as was done to evaluate Surface condition 1. Surface hardness after curing was measured by an A-type hardness meter (manufactured by Kobunshi Keiki Co., Ltd., Askar rubber hardness meter).

### Hardness 2

Curing was conducted in the same manner as described for Surface condition 2. Surface hardness after curing was measured by the same A-type hardness meter as described above.

### Tensile strength

After mixing the liquid A-side with the liquid B-side, the mixture was poured into an aluminum mold (no mold release agent used, at ordinary temperature) of 300 mm long, 150 mm wide and 2 mm deep processed with Teflon (trademark) polytetrafluoroethylene on the mold inner surface, and molded, followed by curing at 23°C for 7 days (or 23°C for 1 day plus 50°C for 1 day), to obtain a sheet of 2 mm in thickness. This sheet was measured for tensile strength (MPa) in accordance with JIS-K6251.

### Percentage Elongation

A sheet of 2 mm in thickness obtained in the same manner as those in the above-described Tensile strength test was measured for elongation percentage (%) in accordance with JIS-K6251.

### Tear strength

The sheet of 2 mm in thickness obtained in the same manner as described above for Tensile strength was measured for Tear strength (N/mm) in accordance with JIS-K6252.

**Table 8:**

| | | Example | | | | |
|---|---|---|---|---|---|---|
| | | 1 | 2 | 3 | 4 | 5 |
| Feature of surface finishing material | A-Side | A-1 | A-2 | A-3 | A-4 | A-5 |
| | B-Side | B-1 | B-1 | B-1 | B-1 | B-1 |
| | Parts by weight of A-Side | 66.3 | 66.3 | 66.3 | 66.3 | 66.3 |
| | Parts by weight of B-Side | 100 | 100 | 100 | 100 | 100 |
| | NCO INDEX | 115 | 115 | 115 | 115 | 115 |
| | Ash content (%) | 50 | 50 | 50 | 50 | 50 |
| Evaluation | Usable time (minute) | 70 | 69 | 62 | 53 | 45 |
| | Surface condition 1 | ○ | ○ | ○ | ○ | □ |
| | Surface condition 2 | ○ | ○ | ○ | ○ | ○ |
| | Surface condition 3 | ○ | ○ | ○ | ○ | ○ |
| | Presence of foaming | None | None | None | None | None |
| | Hardness 1 | 36 | 35 | 31 | 30 | 26 |
| | Hardness 2 | 52 | 52 | 50 | 46 | 46 |
| | Tensile strength(MPa) | 4.51 | 4.50 | 4.55 | 4.25 | 3.78 |
| | Elongation (%) | 1048 | 1052 | 1061 | 1067 | 1133 |
| | Tear strength(N/mm) | 17.56 | 17.35 | 16.16 | 16.46 | 15.31 |

**Table 9:**

| | | Example | | Comparative example | | Example |
|---|---|---|---|---|---|---|
| | | 6 | 7 | 1 | 2 | 8 |
| Feature of surface finishing material | A-Side | A-6 | A-8 | A-7 | A-9 | A-10 |
| | B-Side | B-1 | B-1 | B-1 | B-1 | B-1 |
| | Parts by weight A-Side | 66.3 | 66.3 | 66.3 | 66.3 | 66.3 |
| | Parts by weight B-Side | 100 | 100 | 100 | 100 | 100 |
| | NCO INDEX | 115 | 115 | 115 | 115 | 115 |
| | Ash content (%) | 50 | 50 | 50 | 50 | 50 |
| Evaluation | Usable time (minute) | 40 | 63 | 37 | <10 | 66 |
| | Surface condition 1 | Δ | Δ | × | ×× | ○ |
| | Surface condition 2 | ○ | ○ | Δ | × | ○ |
| | Surface condition 3 | ○ | ○ | × | × | ○ |
| | Presence of foaming | None | None | None | None | None |
| | Hardness 1 | 25 | 36 | 29 | 25 | 33 |
| | Hardness 2 | 45 | 57 | 45 | 38 | 56 |
| | Tensile strength(MPa) | 3.67 | 4.71 | 4.32 | 1.92 | 5.19 |
| | Elongation (%) | 1114 | 949 | 1074 | 1138 | 1016 |
| | Tear strength (N/mm) | 15.03 | 18.19 | 14.22 | 9.80 | 19.91 |

**Table 10:**

| | | Example | | | | |
|---|---|---|---|---|---|---|
| | | 9 | 10 | 11 | 12 | 13 |
| Feature of surface finishing material | A-Side | A-11 | A-12 | A-13 | A-13 | A-14 |
| | B-Side | B-1 | B-1 | B-1 | B-4 | B-1 |
| | Parts by weight A-Side | 49.8 | 39.8 | 66.3 | 79.6 | 49.8 |
| | Parts by weight B-Side | 100 | 100 | 100 | 100 | 100 |
| | NCO INDEX | 115 | 115 | 115 | 115 | 115 |
| | Ash content(%) | 50 | 50 | 50 | 40 | 50 |
| Evaluation | Usable time (minute) | 47 | 38.5 | 67 | 57.5 | 48 |
| | Surface condition 1 | ○ | □ | ○ | ○ | ○ |
| | Surface condition 2 | □ | □ | ○ | ○ | □ |
| | Surface condition 3 | ○ | ○ | ○ | ○ | ○ |
| | Presence of foaming | None | None | None | None | None |
| | Hardness 1 | 48 | 50 | 33 | 33 | 45 |
| | Hardness 2 | 62 | 66 | 53 | 49 | 60 |
| | Tensile strength(MPa) | 5.30 | 5.39 | 2.43 | 3.83 | 4.90 |
| | Elongation (%) | 985 | 778 | 880 | 1061 | 1022 |
| | Tear strength(N/mm) | 19.88 | 20.57 | 16.96 | 16.00 | 18.99 |

**Table 11:**

| | | Example | | | | |
|---|---|---|---|---|---|---|
| | | 14 | 15 | 16 | 17 | 18 |
| Feature of surface finishing material | A Side | A-14 | A-15 | A-15 | A-11 | A-12 |
| | B-Side | B-4 | B-1 | B-4 | B-9 | B-9 |
| | Parts by weight A-Side | 59.7 | 39.8 | 47.8 | 59.7 | 39.8 |
| | Parts by weight B-Side | 100 | 100 | 100 | 100 | 100 |
| | NCO INDEX | 115 | 115 | 115 | 115 | 115 |
| | Ash content(%) | 40 | 50 | 40 | 50 | 50 |
| Evaluation | Usable time (minute) | 38 | 34.5 | 34.5 | 29 | 27 |
| | Surface condition 1 | ○ | □ | □ | ○ | □ |
| | Surface condition 2 | □ | □ | □ | □ | □ |
| | Surface condition 3 | ○ | ○ | ○ | ○ | ○ |
| | Presence of foaming | None | None | None | None | None |
| | Hardness 1 | 45 | 55 | 48 | 44 | 46 |
| | Hardness 2 | 56 | 65 | 60 | 55 | 58 |
| | Tensile strength(MPa) | 4.19 | 3.84 | 4.31 | 4.55 | 4.17 |
| | Elongation (%) | 810 | 854 | 723 | 1026 | 868 |
| | Tear strength(N/mm) | 17.32 | 19.09 | 17.03 | 15.05 | 15.53 |

**Table 12:**

| | | Example | | | | |
|---|---|---|---|---|---|---|
| | | 19 | 20 | 21 | 22 | 23 |
| Feature of surface finishing material | A-Side | A-10 | A-10 | A-10 | A-10 | A-10 |
| | B-Side | B-2 | B-3 | B-5 | B-6 | B-7 |
| | Parts by weight A-Side | 66.3 | 67.0 | 66.3 | 66.3 | 66.3 |
| | Parts by weight B-Side | 100 | 100 | 100 | 100 | 100 |
| | NCO INDEX | 115 | 115 | 115 | 115 | 115 |
| | Ash content(%) | 50 | 50 | 50 | 50 | 50 |
| Evaluation | Usable time (minutes) | 52 | 41 | 47 | 59 | 51 |
| | Surface condition 1 | ○ | □ | ○ | ○ | □ |
| | Surface condition 2 | ○ | ○ | ○ | ○ | ○ |
| | Surface condition 3 | ○ | ○ | ○ | ○ | ○ |
| | Presence of foaming | None | None | None | None | None |
| | Hardness 1 | 50 | 47 | 34 | 27 | 25 |
| | Hardness 2 | 60 | 59 | 53 | 52 | 50 |
| | Tensile strength(MPa) | 4.77 | 4.94 | 4.65 | 3.09 | 2.05 |
| | Elongation (%) | 797 | 899 | 1042 | 994 | 1005 |
| | Tear strength(N/mm) | 17.52 | 22.45 | 17.22 | 15.27 | 12.50 |

**Table 13:**

| | | Example | | | Comparative Example |
|---|---|---|---|---|---|
| | | 24 | 25 | 26 | 3 |
| Feature of surface finishing material | A-Side | A-10 | A-10 | A-10 | A-10 |
| | B-Side | B-8 | B-9 | B-10 | B-11 |
| | Parts by weight A-Side | 66.3 | 66.3 | 67.1 | 122.5 |
| | Parts by weight B-Side | 100 | 100 | 100 | 100 |
| | NCO INDEX | 115 | 115 | 115 | 115 |
| | Ash content(%) | 50 | 50 | 50 | 0 |
| Evaluation | Usable time (minute) | 42 | 32 | 80 | <20 |
| | Surface condition 1 | □ | □ | □ | ○ |
| | Surface condition 2 | ○ | ○ | ○ | ○ |
| | Surface condition 3 | ○ | ○ | ○ | ○ |
| | Presence of foaming | None | None | None | None |
| | Hardness 1 | 26 | 30 | 24 | 28 |
| | Hardness 2 | 49 | 49 | 46 | 45 |
| | Tensile strength(MPa) | 2.68 | 4.73 | 4.00 | 2.72 |
| | Elongation (%) | 1049 | 1127 | 1112 | 574 |
| | Tear strength(N/mm) | 12.12 | 13.92 | 13.60 | 8.20 |

From the above results, it can be seen that any product within the scope of the present invention has a long usable time, suppressed adhesion of surface after 7 day curing, an excellent finish and also maintains good strength properties. In contrast, it can be seen that the products of the Comparative examples have a very short usable time which would make it difficult to carry out hand-painting operation and exhibits adhesion after curing making it difficult to use.

## Claims

1. An ambient temperature curable surface finishing material for indoor and outdoor facilities comprising a polyurethane-based composition comprising the reaction product of
a) an A-side comprising a urethane prepolymer having terminal isocyanate groups comprising the reaction product of
1) a polyisocyanate comprising 50% by weight or more of 2,4'-diphenylmethane diisocyanate
with
2) at least one polyol,
and
b) a B-side comprising
1) at least one polyol,
2) a crosslinker
and
3) a filler comprising an acid filler having a pH of less than 7.

2. The ambient temperature curable surface finishing material for indoor and outdoor facilities of Claim 1 in which the crosslinker b)2) is an aromatic amine based crosslinker.

3. The ambient temperature curable surface finishing material for indoor and outdoor facilities of Claim 1 in which a mixture of the A-side and B-side reaches a viscosity of 50,000 mPa·s in 20 minutes or more when measured by a B-type viscometer under conditions of No.7 rotor, 20 turns/min and 30°C.

4. The ambient temperature curable surface finishing material for indoor and outdoor facilities of Claim 2 in which a mixture of the A-side and B-side reaches a viscosity of 50,000 mPa·s in 20 minutes or more when measured by a B-type viscometer under conditions of No.7 rotor, 20 turns/min and 30°C.

5. The ambient temperature curable surface finishing material for indoor and outdoor facilities of Claim 1 in which the surface adhesive force of the surface finishing material layer is 2N/cm² or less.

6. The ambient temperature curable surface finishing material for indoor and outdoor facilities of Claim 2 in which the surface adhesive force of the surface finishing material layer is 2N/cm² or less.

## Patentansprüche

1. Bei Umgebungstemperatur härtbares Oberflächenvergütungsmaterial für Innen- und Außeneinrichtungen, umfassend eine auf Polyurethan basierende Zusammensetzung, umfassend das Umsetzungsprodukt von
a) einer A-Seite, umfassend ein Urethanprepolymer mit Isocyanat-Endgruppen, umfassend das Umsetzungsprodukt von
1) einem Polyisocyanat, das 50 Gew.-% oder mehr 2,4'-Diphenylmethandiisocyanat umfaßt,
mit
2) mindestens einem Polyol,
und
b) einer B-Seite, umfassend
1) mindestens ein Polyol,
2) einen Vernetzer
und
3) einen Füllstoff, der einen sauren Füllstoff mit einem pH-Wert von weniger als 7 umfaßt.

2. Bei Umgebungstemperatur härtbares Oberflächenvergütungsmaterial für Innen- und Außeneinrichtungen nach Anspruch 1, wobei es sich bei dem Vernetzer b)2) um einen auf aromatischem Amin basierenden Vernetzer handelt.

3. Bei Umgebungstemperatur härtbares Oberflächenvergütungsmaterial für Innen- und Außeneinrichtungen nach Anspruch 1, wobei die Mischung der A-Seite und der B-Seite in 20 Minuten oder mehr eine Viskosität von 50.000 mPa·s bei Messung mit einem Viskosimeter vom B-Typ unter den Bedindungen Rotor Nr. 7, 20 Umdrehungen/min und 30°C erreicht.

4. Bei Umgebungstemperatur härtbares Oberflächenvergütungsmaterial für Innen- und Außeneinrichtungen nach Anspruch 2, wobei die Mischung der A-Seite und der B-Seite in 20 Minuten oder mehr eine Viskosität von 50.000 mPa·s bei Messung mit einem Viskosimeter vom B-Typ unter den Bedindungen Rotor Nr. 7, 20 Umdrehungen/min und 30°C erreicht.

5. Bei Umgebungstemperatur härtbares Oberflächenvergütungsmaterial für Innen- und Außeneinrichtungen nach Anspruch 1, wobei die Oberflächenhaftkraft der Oberflächenvergütungsmaterialschicht 2 N/cm² oder weniger beträgt.

6. Bei Umgebungstemperatur härtbares Oberflächenvergütungsmaterial für Innen- und Außeneinrichtungen nach Anspruch 2, wobei die Oberflächenhaftkraft der Oberflächenvergütungsmaterialschicht 2 N/cm² oder weniger beträgt.

## Revendications

1. Matière de finition de surface durcissable à température ambiante pour des installations d'intérieur et d'extérieur comprenant une composition à base de polyuréthane comprenant le produit de réaction de
a) un composant côté A comprenant un prépolymère d'uréthane ayant des groupes isocyanates terminaux comprenant le produit de réaction de
1) un polyisocyanate comprenant 50 % en poids ou plus de 2,4'-diisocyanate de diphénylméthane avec
2) au moins un polyol,
et
b) un composant côté B comprenant
1) au moins un polyol,
2) un agent de réticulation
et
3) une charge comprenant une charge acide ayant un pH inférieur à 7.

2. Matière de finition de surface durcissable à température ambiante pour des installations d'intérieur et d'extérieur selon la revendication 1 dans laquelle l'agent de réticulation b)2) est un agent de réticulation à base d'amine aromatique.

3. Matière de finition de surface durcissable à température ambiante pour des installations d'intérieur et d'extérieur selon la revendication 1 dans laquelle un mélange du composant côté A et du composant côté B atteint une viscosité de 50 000 mPa·s en 20 minutes ou plus lorsqu'elle est mesurée par un viscosimètre de type B dans des conditions de mobile n° 7, 20 tours/min et 30 °C.

4. Matière de finition de surface durcissable à température ambiante pour des installations d'intérieur et d'extérieur selon la revendication 2 dans laquelle un mélange du composant côté A et du composant côté B atteint une viscosité de 50 000 mPa.s en 20 minutes ou plus lorsqu'elle est mesurée par un viscosimètre de type B dans des conditions de mobile n° 7, 20 tours/min et 30 °C.

5. Matière de finition de surface durcissable à température ambiante pour des installations d'intérieur et d'extérieur selon la revendication 1 dans laquelle la force d'adhérence de surface de la couche de matière de finition de surface est inférieure ou égale à 2 N/cm².

6. Matière de finition de surface durcissable à température ambiante pour des installations d'intérieur et d'extérieur selon la revendication 2 dans laquelle la force d'adhérence de surface de la couche de matière de finition de surface est inférieure ou égale à 2 N/cm².
